# EUROPÄISCHE PATENTSCHRIFT

(11) **EP 0 711 197 B1**
(45) Veröffentlichungstag und Bekanntmachung des Hinweises auf die Patenterteilung: **09.04.1997**
(21) Anmeldenummer: 94924806.6
(22) Anmeldetag: 27.07.1994
(51) Int. Cl.: B01D 49/00, B01D 50/00, B01J 19/10

(54) **MASCHINE ZUR ABSCHEIDUNG VON AEROSOLTEILCHEN**
MACHINE FOR SEPARATING AEROSOL PARTICLES
MACHINE PERMETTANT DE SEPARER DES PARTICULES D'AEROSOL

(30) Priorität: 27.07.1993 LU 88387
(43) Veröffentlichungstag der Anmeldung: 15.05.1996
(73) Patentinhaber: EUROPÄISCHE ATOMGEMEINSCHAFT (EURATOM), L-2920 Luxembourg (LU)
(72) Erfinder: MAGILL, Joseph, D-7500 Karlsruhe (DE); WERNER, Paul, D-76706 Dettenheim (DE)
(74) Vertreter: Weinmiller, Jürgen
(86) Internationale Anmeldenummer: EP9402472
(87) Internationale Veröffentlichungsnummer: WO9503872

(56) Entgegenhaltungen:
- EP-A- 0 117 586
- DE-A- 2 060 617
- DE-A- 4 230 482
- US-A- 3 026 966

## Beschreibung

Die Erfindung bezieht sich auf eine Maschine zur Abscheidung von Aerosolteilchen, mit einer zylindrischen Ultraschallkammer, in der die Teilchen in Gegenwart eines eingespeisten Keimbildners agglomerieren sollen, und mit einem Filter, in dem die agglomerierten Teilchen hängenbleiben.

Die Maschine kann eingesetzt werden bei der Entfernung von toxischen Aerosolen aus Gasatmosphären, die beispielsweise durch radioaktive Brände, konventionelle Brandfälle, Chemiebrände oder unkontrollierte chemische Reaktionen, insbesondere in geschlossenen Räumen entstehen. Konventionelle HEPA-Filtersysteme (High Efficiency Particulate Air) sind nämlich zur Abscheidung großer Mengen toxischer Aerosole in Verbindung mit Ruß oder Wasserdampf nur eingeschränkt brauchbar. Ein weiterer Anwendungsfall ist die Wiedergewinnung von industriell wertvollen Werkstoffteilchen aus Gasströmungen.

Nach einem Unfall können in Gebäuderäumen durch Stromausfall, Rußbildung und Entstehung von Brandgasen für die Unfallbekämpfer äußerst schwierige Verhältnisse entstehen, die fremdbelüftete Vollschutzanzüge, künstliche Beleuchtung usw. erfordern oder ein Betreten der Räume wegen giftiger Gase, wegen Rauch und absoluter Dunkelheit für die Abwehr völlig unmöglich machen.

In geschlossenen Räumen erstickt ein Feuer durch Sauerstoffmangel. Man kann deswegen nicht Rauchpartikel und Brandgase entfernen, indem man Rauchabzugsmöglichkeiten eröffnet, da dadurch Sauerstoff zuströmt und der Brand erneut entfacht wird.

In solchen und ähnlichen Fällen muß also zuerst der Rauch mit unter Umständen giftigen Aerosolen aus dem betroffenen Raum entfernt werden, ohne daß dadurch neuer Sauerstoff in den betroffenen Raum gelangt.

Aus der Patentschrift ES-459 523 A1 ist ein Verfahren und eine Vorrichtung zur Reinigung von Rauch mittels Ultraschall gemäß den Merkmalen des Oberbegriffs des Anspruchs 1 bekannt. Hierbei wird in einer zylindrischen Ultraschallkammer ein stehendes Schallfeld erzeugt, dem die tangential in die Kammer eingespeisten Rauchgase unterworfen werden. Die Rauchgase strömen spiralförmig von einer Stirnseite der Kammer zur anderen und werden zur Verbesserung der Agglomeration mit einem Keimbildner vermischt, der an mehreren Stellen in die Kammer eingesprüht wird.

Eine solche Vorrichtung arbeitet insbesondere dann unbefriedigend, wenn die Aerosolteilchen, die abgeschieden werden sollen, sehr klein sind (kleiner als 0,1 Mikrometer). Dann ist nämlich die Massenträgheit der Teilchen so gering, daß sie sich auch im Ultraschallfeld nur wenig hin und her bewegen und so mit benachbarten Partikeln nicht zusammenstoßen können. Dann ist der schraubenförmige Weg der Aerosolteilchen durch die Ultraschallkammer zu kurz, als daß sie mit hoher Wahrscheinlichkeit mit anderen Teilchen kollidieren könnten. Durch Einblasen von Wassertröpfchen, Einspritzen oder Verdüsen von Flüssigkeiten in das mit dem abzuscheidenden Aerosol belastete Gas kann die Agglomerationswirkung nicht wesentlich erhöht werden, so daß aus Gründen des Umweltschutzes die Notwendigkeit besteht, den Reinigungsprozeß weiter zu vervollkommnen, etwa um hochgiftige Stoffe wie Plutoniumstaub oder giftige Industriestäube möglichst vollständig aus dem belasteten Gas abzuscheiden.

Aufgabe der Erfindung ist es also, eine Maschine anzugeben, die giftige Aerosole zuverlässig abscheidet, so daß der betroffene Raum rasch wieder für Sanierungsarbeiten zugänglich wird.

Diese Aufgabe wird erfindungsgemäß durch die im Anspruch 1 definierte Maschine gelöst. Bezüglich von Merkmalen bevorzugter Ausführungsformen der Erfindung wird auf die Unteransprüche verwiesen.

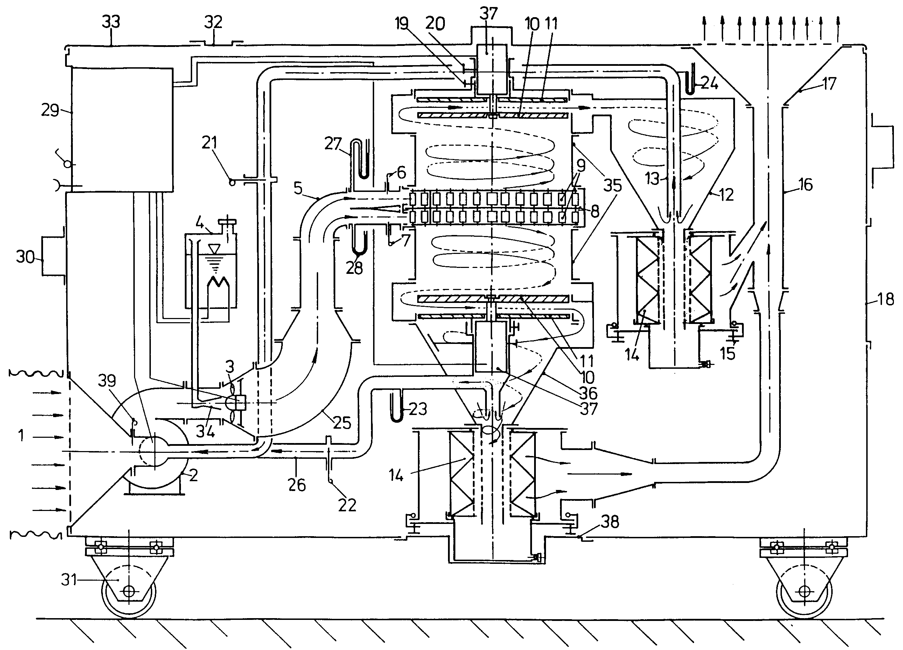

Nachfolgend wird die Erfindung anhand eines bevorzugten Ausführungsbeispiels mit Hilfe der einzigen Zeichnung näher erläutert, die schematisch die erfindungsgemäße Maschine zeigt.

Die Maschine zur Beseitigung toxischer Aerosole aus Gasatmosphären besitzt ein Radialgebläse 2, von dessen Saugseite aus über ein Ansauggitter 1 die mit toxischen Aerosolen belastete Gasatmosphäre angesaugt wird. Von der Druckseite des Radialgebläses 2 aus wird das Gas mit erhöhtem Druck und hoher Geschwindigkeit in eine Mischkammer 25 geblasen, an deren Eingang ein Verteiler 34 angebracht ist. Über einen beheizbaren und befüllbaren Druckbehälter 4 wird beispielsweise bei einer Temperatur von etwa 300°C ein Glykol-Sattdampf durch den Verteiler 34 in die mit toxischen Aerosolen beladene Gasatmosphäre eingeleitet. Über einen Rotationsmischer 3 wird die giftige, kalte Gasatmosphäre mit dem heißen Glykol-Sattdampf gründlich vermischt und in die Mischkammer 25 gedrückt, wo aufgrund des größeren Kanalvolumens und der verringerten Strömungsgeschwindigkeit das Gemisch einen langsam strömenden Nebel bildet. Über einen Stutzen 5 wird das toxische Aerosol-Gas-Nebelgemisch in zwei etwa gleich große Ströme geteilt, die durch eine Platte 8 voneinander getrennt sind und durch zwei zylindrische Leitschaufelgitter 9 tangential rotierend in einen zylindrischen Prozeßbehälter 35 eingeleitet. Die Stellung der Leitschaufeln der Leitschaufelgitter 9 ist so gewählt, daß das belastete Gas infolge des erheblich größeren Strömungsquerschnitts im Prozeßbehälter 35 langsam und in vielen Windungen nach oben strömt, wie in der Figur angedeutet ist.

Das toxische Gas-Nebelgemisch wird durch Ultraschallgeneratoren 37 über die Schwingerkreisplatten 10 einem Ultraschallfeld bei etwa 20 kHz Schwingerfrequenz mit einem Schallpegel von beispielsweise 155 dB unterworfen. Das so behandelte Aerosol-Gas-Nebelgemisch vermag durch die besonderen physikalischen Bindungseigenschaften des im kalten Medium kondensierenden Glykolnebels unter der gleichzeitigen Einwirkung der Ultraschall-Gasteilchenschwingungsamplituden trotz der toxischen Aerosolteilchengrößen (< 1 µm) diese unmittelbar zu größeren Konglomeraten im Bereich von 5 µm bis etwa 20 µm zu agglomerieren.

Im weiteren Verlauf der Rotationsströmung wird das Aerosol-Gas am Ende über spiralförmige Erweiterungen des Prozeßbehälters 35 zwischen den Schwinger-Kreisplatten 10 und den Resonanz-Kreisplatten 11 langsam rotierend hindurchgeblasen, wobei es jeweils zwischen der mit Ultraschallfrequenz schwingenden Kreisringplatte 10 und der längsverstellbar über Stellschrauben 19 angebrachten Kreisringplatte 11 einer hochintensiven Agglomerationswirkung unterworfen wird.

Der Prozeßbehälter 35 mit den Leitschaufelgittern 9 und der Platte 8 ist so aufgebaut, daß das Gas durch die tangentiale spiralförmige Führung über die verstellbaren Leitgitterschaufeln eine weitgehend gleichförmige Rotationsströmung erfährt. Die Anzahl der Rotationen kann über das Gebläse 2 (Volumen, Druck) und die zur Änderung der Strömungsrichtung einstellbaren Leitschaufeln eingestellt werden. Der Gasvolumendurchsatz wird durch Ventile 6 und 7 und Meßgeräte 27 und 28 eingestellt.

Die vielmalige langsame Rotation der Gasströmung zwischen einer Ultraschall-Schwinger-Kreisplatte 10 und der als Reflektor wirkenden Platte 8, die Ausnutzung der abgestrahlten Ultraschallenergie zwischen der Rückseite der Ultraschall-Schwingerkreisplatten 10 und weiteren Reflektorplatten 11 hinter diesen bewirken eine deutliche Verlängerung der Verweilzeit der Aerosolpartikel im Ultraschallfeld. Dann gelangt der Gasstrom mit den agglomerierten Partikeln in Zyklonabscheider 12, 36, aus denen die größeren agglomerierten Teilchen in ein Filter 14 gelangen und die Kleinstteilchen über Absaugleitungen 13, 26 zum Gebläse 2 zurückgeführt werden. Durch die Rückführung über Rohrleitungen 13 und 26 und die Ventile 21, 22 und 39 können die bisher noch nicht zu größeren Partikeln agglomerierten Teilchen beliebig oft den Agglomerationskreislauf durchlaufen. Das gereinigte Gas verläßt das Filter und die Maschine über einen Auslaßkanal 16 und einen Diffusor 17.

Auf diese Weise wird in einem mit toxischen Aerosol-Gasen verseuchten Raum nach relativ kurzer Zeit die vergiftete Atmosphäre gereinigt.

Die Größe des erforderlichen Unterdrucks und der gewünschten Volumenprozentanteil zur Absaugung der Kleinstteilchen aus dem Abscheider wird über Meßgeräte 23 und 24 und Ventile 21, 22 und 39 geregelt.

Die elektrische Versorgungs- und Hochspannungsenergie für Gebläse 2, Verdampfungsheizung in Druckbehälter 4 und die Ultraschallgeneratoren 37 werden über eine eigene Elektrozentrale 29 beliefert.

Die Ver- und Entsorgung mit neuen Vorratsstoffen und verbrauchtem Material sowie die Inspektion wird über die Klappen 15, 18, 32, 33 und 38 bewerkstelligt.

Die Maschine ist in einem handlichen Format aufgebaut und wird über Griffe 30 und drehbar gelagerte Rollen 31 an oder in den Einsatzraum geschoben.

## Patentansprüche

1. Maschine zur Abscheidung von Aerosolteilchen mit einer zylindrischen Ultraschallkammer (35), in der die Teilchen in Gegenwart eines eingespeisten Keimbildners agglomerieren sollen, und mit einem Filter (14), in dem die agglomerierten Teilchen hängenbleiben,
dadurch gekennzeichnet, daß vor der Ultraschallkammer eine Mischzone (25) vorgesehen ist, in der eine als Keimbildner wirkende dampfförmige Substanz in den Strom der Aerosolteilchen zur Bildung eines Nebels eingespeist wird, und daß ein Zyklonabscheider (12, 36) den aus der Ultraschallkammer (35) austretenden Strom empfängt und einen Teilstrom mit den größeren agglomerierten Teilchen in das Filter einspeist und das Restaerosol mit den Kleinstteilchen zur Mischzone (25) zurückführt.

2. Maschine nach Anspruch 1, dadurch gekennzeichnet, daß die Ultraschallkammer (35) aus zwei gleichwirkenden Teilkammern besteht, die stirnseitig über eine gemeinsame Ultraschall-Reflektorplatte (8) aneinanderliegen, und daß ein Schwinger (10) an jeder von der Ultraschall-Reflektorplatte (8) entfernten Stirnseite der Ultraschallkammer (35) vorgesehen ist und die Einspeisung in die Kammer zu beiden Seiten der Reflektorplatte (8) tangential erfolgt, während der Ausgang aus der Kammer am Rand des jeweiligen Schwingers (10) liegt.

3. Maschine nach einem der Ansprüche 1 bis 2, dadurch gekennzeichnet, daß Ventile (21, 22, 6, 7, 39) in den Aerosolleitungen vorgesehen sind, die von Druckmessern (23, 24, 27, 28) so gesteuert werden, daß die Rückführung des Restaerosols zur Mischzone (25) sowie die Verweilzeit des Aerosols im Schallfeld optimierbar ist.

4. Verfahren zum Betrieb der Maschine nach einem der Ansprüche 1 bis 3, dadurch gekennzeichnet, daß als Keimbildner-Substanz Glykol verwendet wird, das als Sattdampf in die Mischzone eingespeist wird.

## Claims

1. A machine for separating aerosol particles, comprising a cylindrical ultrasonic chamber (35) in which the particles agglomerate in the presence of an injected agglomeration initiator, and comprising a filter (14) for retaining the agglomerated particles,
characterized in that upstream of the ultrasonic chamber, a mixing zone (25) is provided in which a vapour acting as agglomeration initiator is injected into the flow of aerosol particles, thereby producing a mist, and that a cyclone separator (12, 36) receives the flow from the ultrasonic chamber (35) and supplies a partial flow including the agglomerated heavier particles to the filter and recycles the remaining aerosol including the microparticles towards the mixing zone (25).

2. A machine according to claim 1, characterized in that the ultrasonic chamber (35) consists of two partial chambers of identical function, which chambers are juxtaposed via a common ultrasonic reflector plate (8), and that a vibrator plate (10) is provided at each frontal face of the ultrasonic chamber (35) remote from the ultrasonic reflector plate (8), the gas injection into the chamber on either side of the reflector plate (8) being performed tangentially and the outlet from the chamber being situated at the peripheral border of the respective vibrator plate (10).

3. A machine according to one of claims 1 and 2, characterized in that valves (21, 22, 6, 7, 39) are provided in the aerosol path, these valves being controlled by pressure gauges (23, 24, 27, 28) in such a way that the recycling of the remaining aerosol towards the mixing zone 25) as well as the residence time of the aerosol in the ultrasonic field can be optimized.

4. A method for operating the machine according to one of claims 1 to 3, characterized in that the material of the agglomeration initiator is glycol which is injected into the mixing zone as a saturated vapour.

## Revendications

1. Machine pour séparer des particules d'aérosol, la machine comprenant une chambre cylindrique ultra-sonore (35), dans laquelle les particules sont agglomérées en présence d'un produit d'initiation de l'agglomération, et comprenant un filtre (14) pour retenir les particules agglomérées, caractérisée en ce qu'on prévoit en amont de ladite chambre ultra-sonore une zone de mélange (25) où on injecte dans l'écoulement des particules d'aérosol un produit évaporé qui sert à l'initiation de l'agglomération et à la formation d'un brouillard, et en ce qu'un séparateur cyclonique (12, 36) reçoit l'écoulement sortant de la chambre ultra-sonore (35) et injecte un flux partiel de cet écoulement comprenant les particules agglomérées de taille plus grande dans le filtre, alors que le restant de l'aérosol avec les micro-particules est recyclé dans la zone de mélange.

2. Machine selon la revendication 1, caractérisée en ce que la chambre ultra-sonore (35) se compose de deux chambres partielles homologues qui sont juxtaposées frontalement par l'intermédiaire d'une plaque commune de réflexion ultra-sonore (8) et en ce qu'une plaque d'oscillation (10) est prévue à chaque face frontale de la chambre ultra-sonore (35) éloignée de la plaque de réflexion ultra-sonore (8), l'injection de l'aérosol dans la chambre s'effectuant de part et d'autre de la plaque de réflexion (8) en direction tangentielle, alors que la sortie de la chambre se situe à la bordure de la plaque d'oscillation respective (10).

3. Machine selon l'une des revendications 1 à 2, caractérisée en ce qu'on prévoit des vannes (21, 22, 6, 7, 39) dans les conduits de l'aérosol, ces vannes étant commandées par des jauges de pression (23, 24, 27, 28) de telle manière que le recyclage de l'aérosol résiduel vers la zone de mélange (25) ainsi que la durée de présence de l'aérosol dans le champ acoustique peuvent être optimisés.

4. Procédé pour la mise en oeuvre de la machine selon l'une des revendications 1 à 3, caractérisée en ce qu'on utilise du glycol en tant que produit d'initiation de l'agglomération, ce produit étant injecté dans la zone de mélange sous forme de vapeur saturée.
